# EUROPEAN PATENT APPLICATION

(11) **EP 3 501 308 A1**
(43) Date of publication of application: **26.06.2019**
(21) Application number: 18184753.4
(22) Date of filing: 20.07.2018
(51) Int. Cl.: A24F 47/00, H02J 7/00

(54) **BATTERY ASSEMBLY AND ELECTRONIC CIGARETTE HAVING SAME**

(30) Priority: 22.12.2017 CN 201721824376 U
(71) Applicant: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(57) **Abstract**

A battery assembly for an electronic cigarette, includes a housing, a limiting block, and an assembling board. The housing is integrally formed and has an opening. The housing defines a cavity communicating with the opening. The housing further includes an inner surface surrounding the cavity. The limiting block extends from the inner surface. The assembling board is inserted into the cavity from the opening and fixed in the limiting block for dividing the cavity into an assembling space and a plug space. The plug space communicates with the opening and accommodates an atomizer via the opening. The assembling space deviates from the opening, and receive one or more electronic components which electrically are electrically connected to the atomizer.

## Description

### CROSS REFERENCE TO RELATED APPLICATIONS

The present application claims the benefit of Chinese Patent Application NO. 201721824376.x filed on Dec. 22, 2017; the contents of which are hereby incorporated by reference.

### TECHNICAL FIELD

The present disclosure relates to electronic cigarettes, in particular to a battery assembly and an electronic cigarette having the battery assembly.

### BACK GROUND

An electronic cigarette is also known as "E-cigarette", which functions as substitutes for quitting smoking or traditional cigarettes. The electronic cigarette has similar appearance with the traditional cigarette, and generates aerosol when it is inhaled by smokers. Even, the electronic cigarette has more various tastes than the traditional cigarette. The electronic cigarette quickly becomes more and more popular because that the electronic cigarette does not generate tar and is far safer than traditional cigarette. Typically, the electronic cigarette includes an atomizer and a battery assembly for powering the atomizer. The atomizer heats tobacco liquid stored in the atomizer to generate aerosol and the smokers can inhale aerosol like inhaling the traditional smoke.

The size of the traditional cigarette is large and it is inconvenience to carry. When more and more people use the electronic cigarette, and the development of the electronic cigarette, a mini electronic cigarette with a small size is produced. However, the mini electronic cigarette includes two parts of shell, and the two parts of the shell are combined together via screws to form an entire shell of the battery assembly. The screws are position outside of the shell. However, there will be a gap between the two parts of the shell and the screws are easily oxidized in air.

Therefore, there is room for improvement in the art.

### SUMMARY

A battery assembly for an electronic cigarette, includes a housing, a limiting block, and an assembling board. The housing is integrally formed and has an opening. The housing defines a cavity communicating with the opening. The housing further includes an inner surface surrounding the cavity. The limiting block extends from the inner surface. The assembling board is inserted into the cavity from the opening and fixed in the limiting block for dividing the cavity into an assembling space and a plug space. The plug space communicates with the opening and accommodates an atomizer via the opening. The assembling space deviates from the opening, and receive one or more electronic components which electrically are electrically connected to the atomizer.

### DRAWING

For a better understanding of the embodiments of the present disclosure or the technical scheme in the prior art, accompanying drawings needed in the description of the embodiments or the prior art are simply illustrated below. Obviously, the accompanying drawings described below are some embodiments of the present disclosure. For the ordinary skill in the field, other accompanying drawings may be obtained according to the structure shown in these accompanying drawings without creative work.
FIG.1 is a cross-sectional view of an electronic cigarette having a battery assembly and an atomizer in accordance with an embodiment.
FIG. 2 is an enlarged view of a portion A shown in FIG.1 in accordance with an embodiment.
FIG. 3 is an enlarged view of a portion B shown in FIG.1 in accordance with an embodiment.
FIG. 4 is an isometric explored view of the electronic cigarette shown in FIG. 1.
FIG. 5 is an isometric exploded view of the atomizer shown in FIG. 1 in accordance with an embodiment.
FIG. 6 is an isometric exploded view of the battery assembly shown in FIG. 1 in accordance with an embodiment.
FIG. 7 is an isometric exploded view of the atomizer viewed from another aspect in accordance with an embodiment.

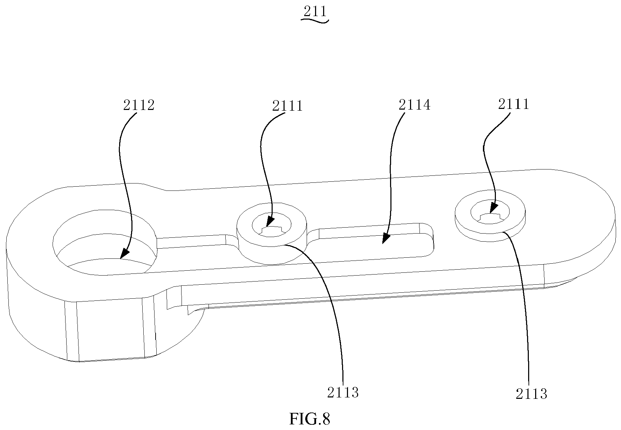

FIG. 8 is an isometric view of a gasket of the battery assembly shown in FIG. 1 in accordance with an embodiment.
FIG. 9 is an isometric view of a pin of the battery assembly shown in FIG. 1 in accordance with an embodiment.
FIG. 10 is an isometric view of the pin of the battery assembly shown in FIG. 1 viewed from another aspect in accordance with an embodiment.

### SPECIFICATION

A clear and complete description as below is provided for the technical scheme in the embodiments of the present disclosure in conjunction with the drawings in the embodiments of the present disclosure. Obviously, the embodiments described hereinafter are simply part embodiments of the present disclosure, but all the embodiments. All other embodiments obtained by the ordinary skill in the art based on the embodiments in the present disclosure without creative work are intended to be included in the scope of protection of the present disclosure.

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly include one or more such features. In the description of the present disclosure, unless otherwise stated, "a plurality of" means at least two, for example, two, three, etc.

In the present disclosure, unless otherwise specifically stated and defined, terms "connected", "fixed", etc. should be interpreted expansively. For example, "fixed" may be fixed connection, also may be detachable connection, or integration; may be mechanical connection, also may be electrical connection; may be direct connection, also may be indirect connection through an intermediate, and may be internal communication between two elements or interaction of two elements, unless otherwise specifically defined. The ordinary skill in this field can understand the specific implication of the above terms in the present disclosure according to specific conditions.

In addition, technical schemes of each embodiment of the present disclosure maybe combined mutually; however, this must be carried out on the basis that the or ordinary skill in this field can implement the combination. When the combination of technical schemes has a conflict or cannot be implemented, it should considered that such combination of technical schemes does not exist and is not in the scope of protection claimed by the present disclosure.

The present disclosure relates to a battery compartment for an electronic cigarette, aiming to solve the problem of tobacco oil leaking in structure in related art.

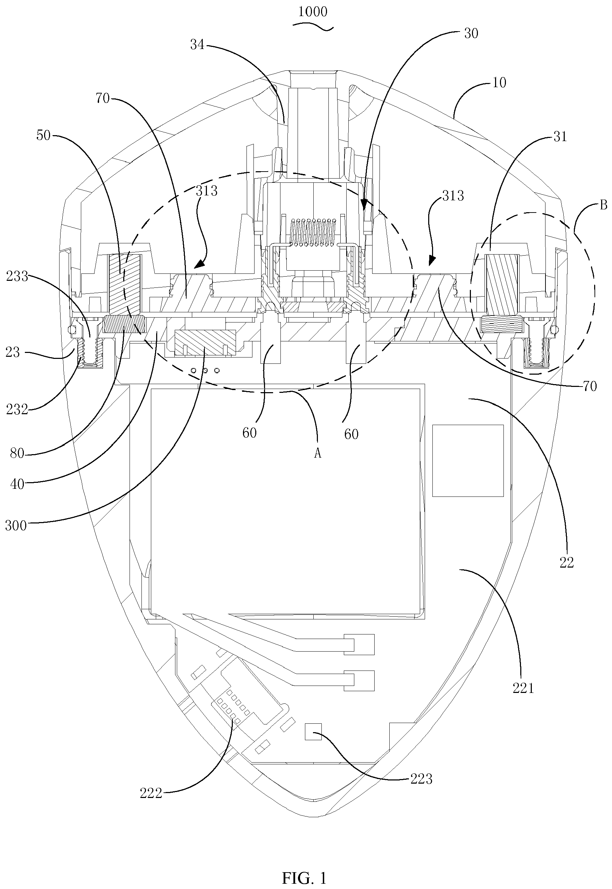

FIG.1 illustrates an electronic cigarette 1000 in accordance with an embodiment. The electronic cigarette 1000 includes a battery assembly 200 and an atomizer 100. The battery assembly 200 is detachably mounted to the battery assembly 200, and configured to power the atomizer 100. The atomizer 100 is configured for storing tobacco liquid, and heating the tobacco liquid to generate aerosol.

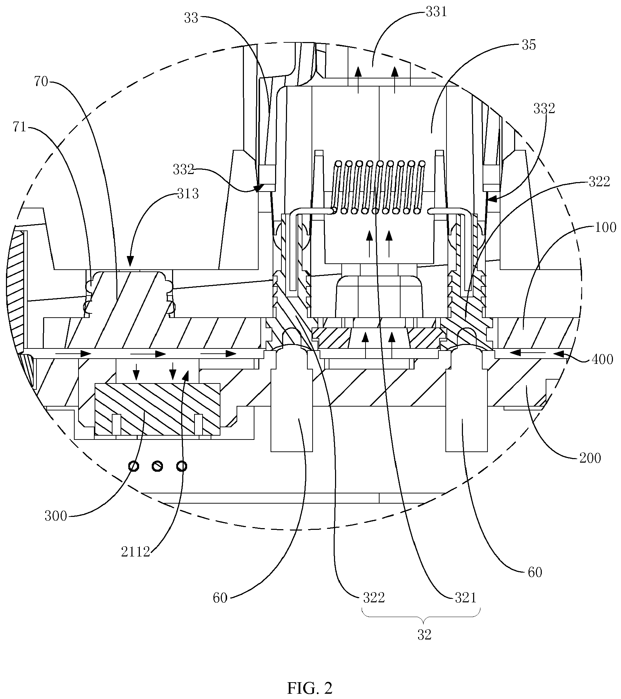

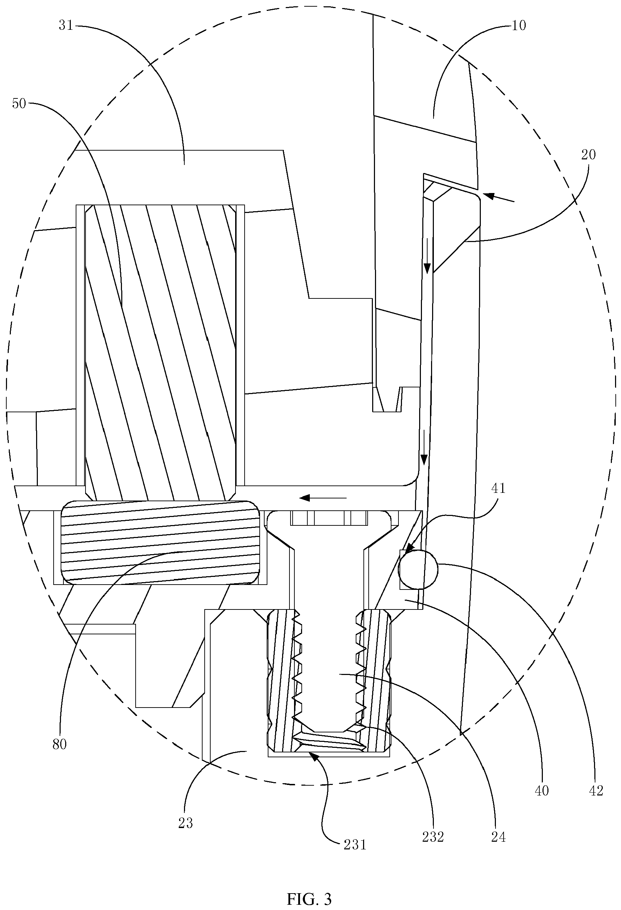

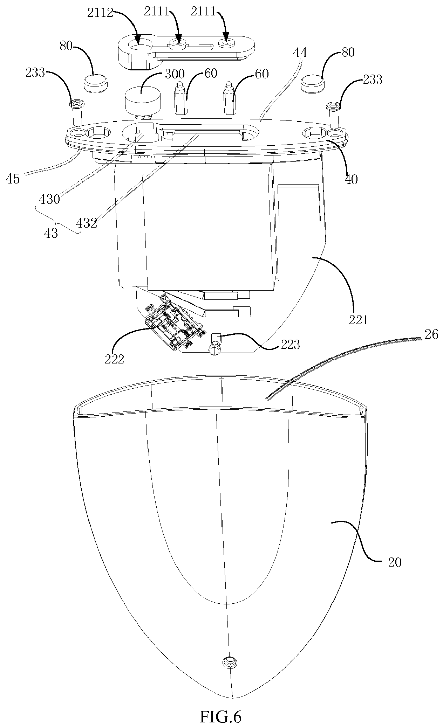

Referring to FIGs.1-4,6, the battery assembly 200 includes a housing 20, an assembling board 40, at least one fastening member 233, and one or more electronic components 24. The assembling board 40, the at least one fastening member 233, the one or more electronic components 24 are mounted in the housing 20. The housing 20 is integrally formed, and defines an opening 25, and a cavity 26 communicating with the opening 25. The housing 20 further includes an inner surface 27 surrounding the cavity 26, and a limiting block 23 protruding from the inner surface 27 and near the opening 25. The assembling board 40 is inserted into the cavity 20 and fixed in the limiting block 23 via the at least one fastening member 233, such that the cavity 20 is divided into a plug space 21 and an assembling space 22 via the limiting block 23. The plug space 21 is configured to accommodate the atomizer 100. The assembling space 22 is configured to accommodate the one or more components 24 and sealed by the assembling board 40. In this embodiment, the housing 20 has an appearance similar to a shield shaped. In other embodiments, the housing 20 may has an appearance similar to but not limited to a cigarette. The assembling board 40 has an appearance fitting the cavity 26. The assembling board 40 has a flat top surface 44 and a bottom surface 45 opposite to the top surface 44. The assembling board 40 defines a fixing hole 43. The fixing hole 43 is in a round-spoon shaped. The fixing hole 43 includes a round hole 430, and an oblong hole 432 communicating with the round hole 430. The diameter of the round hole 430 is larger than the oblong hole 432. Further, the battery assembly 200 further includes a sealing gasket 42. The assembling board 40 defines fixing groove 41 around the assembling board 40 for accommodating the sealing gasket 42. The sealing gasket 42 protrudes from the assembling board 40, and pressed to deform by the inner surface 27 to firmly abut on the inner surface 27.

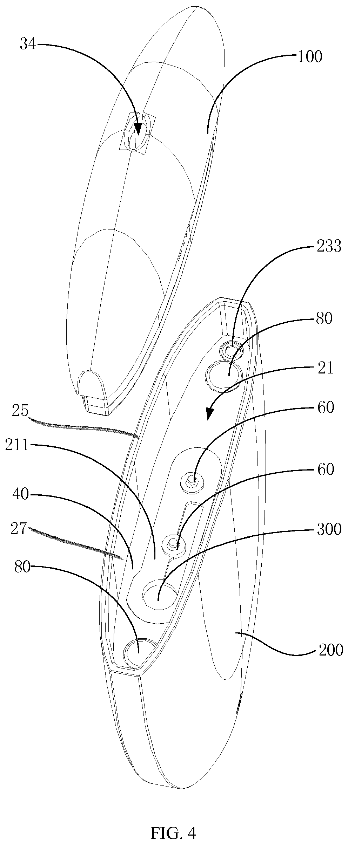

Referring to FIGs. 4-6, the battery assembly 200 further includes two contact pins 60, two first magnetic elements 80, a gasket 211, a trigger 300. The contact pins 60, the first magnetic elements 80, the gasket 211, and the trigger 300 are fixed in the assembling board 40. The shape of the gasket 211 matches the fixing hole 43 and the gasket 211 is accommodated in the fixing hole 43. The gasket 211 defines a first engaging hole 2112, two second engaging holes 2111, an air guide hole 2114, and includes two flanges 2113 around the second engaging holes 2111. The air guide hole 2114 and the first engaging hole 2112 are respectively in accordance with to the round hole 430 and the oblong hole 432. The first engaging hole 2112 is adjacent one end of the air guide hole 2114. One of the second engaged hole 2111 is adjacent a center of the air guide hole 211, the other one of the second engaged hole 2111 is adjacent to an end of the air guide hole 211 away from the first engaged hole 2112. The gasket 211 is positioned in the fixing hole 43, and a periphery wall of the gasket 211 is pressed by an inner sidewall surrounding the fixing hole 43. The trigger 300 is positioned in the first engaged hole 2112. The contact pins 60 are respectively positioned in the second engaged holes 2111. The trigger 300 and the contact pins 60 are then fixed in the assembling board 40. In this embodiment, the contact pins 60 are elastic. The one or more electronic components 24 include a main circuit board 221, a battery 242, at least one light source 223, and a connecter 222. The main circuit board 221 is fixed in the bottom surface 45 of the assembling board 40. The battery 242, the at least one light source 223, the connecter 222 are positioned in the main circuit board 221. The main circuit board 221 is also electrically connected with the trigger 300 and the contact pins 60. In this embodiment, the USB connector 222 can be a mini USB connector, a micro USB connector, a TYPE-C connector etc.

When the atomizer 100 is plugged into the plug space 21, the contact pins 60 are elastically contacted to the atomizer 100, such that the atomizer 100 is electrically connected to the main circuit board 221 via the contact pins 60, and the battery 242 can supply power for the circuit board 221 to drive the atomizer 100. It is understood that, the atomizer 100 can be stably and electrically connected to battery assembly 200 because of the elastic pins 60.

Referring to FIGs. 1-3, in this embodiment, the fastening member 233 is a screw bolt. The limiting block 23 defines a mounting hole 231, and has an engaging member 232 engaged with the fastening member 233. In this embodiment, the engaging member 232 is a nut. It is easily to be understood that, the fastening member 233 and the engaging member 232 can also be other fastening mechanism which are engaged to secure together. The fastening member 233 extends through the assembling board 40 from the top surface 41 to the bottom surface 42 and is engaged with the engaging member 232 together. The assembling bard 40 is thus fixed in the limiting block 23. In other embodiments, the assembling board 40 is fixed to the limiting block 23 via adhesive without the fastening mechanism.

Referring to FIG.1, 5, and 7, the atomizer 100 includes an atomizer module 30, a shell 10 covers the atomizer module 30, and a liquid chamber 90 forming between the shell 10 and the atomizer module 30. One end of the atomizer module 30 is inserted into the plug space 21, and an inlet passageway 400 is formed between the inner surface 27 and the shell 10 to allow air to flow into the atomizer 30. The inlet passageway 400 is a gap between the shell 10 and inner surface 27. The liquid chamber 90 is configured to store the tobacco liquid. When the atomizer 100 is inserted into the plug space 21, the atomizer module 30 is electrically contacted the contact pins 60, and the atomizer 100 is thus electronically connected to the battery assembly 200. The atomizer module 30 heats the tobacco liquid to generate the aerosol when the atomizer 100 is powered. The trigger 300 is positioned in a position which the air can flow over from the inlet passageway 400, and generates a control signal to control the battery assembly 200 to power the atomizer 100. In this embodiment, the trigger 300 is a gas sensitivity sensor.

Referring FIG. 1, 5 and 7, the atomizing module 30 includes an atomization base 31, an atomization core 32, an atomization casing 33, an outlet pipe 34, and a sealing element 70. In this embodiment, the outlet pipe 34 and the atomization casing 33 are integrally formed. The outlet pipe 34 extends from the atomization casing 33. The atomization core 32, the atomization casing 33, and the sealing element 70 are fixed in the atomization base 31. The atomization casing 33 positioned at one side of the atomization base 31 away from the battery assembly 200, and the outlet pipe 34 is away from the atomization base 31. The atomization casing 33 further covers the atomization core 32 to form an atomizing chamber 35. The sealing element 70 is positioned at the other side of the atomization base 31 facing the battery assembly 200. The atomization base 31 and the shell 10 are combined together for receiving the atomization case 32 and forming the liquid chamber 90 among the atomization base 31, the shell 10 and the atomization case 32.

The atomization base 31 defines an inlet hole 311, two pin holes 312 and two filling holes 313. The inlet hole 311, the pin holes 312, and the filling holes 313 are arranged in a straight line. The pin holes 312 are positioned at two sides of the inlet hole 311. Each filling hole 313 is adjacent to each pin hole 312 and away from the inlet hole 311. The filling holes 313 communicate with the liquid chamber 90 and allow the liquid tobacco to be filled into the liquid chamber 90. The inlet hole 311 communicates with the inlet passageway 400. The atomization base 31 further extends a bracket 36 surrounding the inlet hole 311.

The atomizing casing 33 is secured in the bracket 36, and the atomizing chamber 35 is formed by the atomization base 31 together with the atomization case 33. The atomizing chamber 35 communicates with the inlet hole 311 that the air can flow into the atomizing chamber 35. The atomization casing 33 defines an outlet hole 331, and at least one guide hole 332. The outlet hole 311 communicates with the atomizing chamber 35 and the outlet pipe 34 that the air can flow out of the atomizer 200 only via the outlet pipe 34. The guide hole 332 communicates with the liquid chamber 90 for allowing the liquid to flow into the atomization chamber 35.

The sealing element 70 is movably secured in the atomizing base 31. The sealing element 70 can seals and open the filing hole 313.

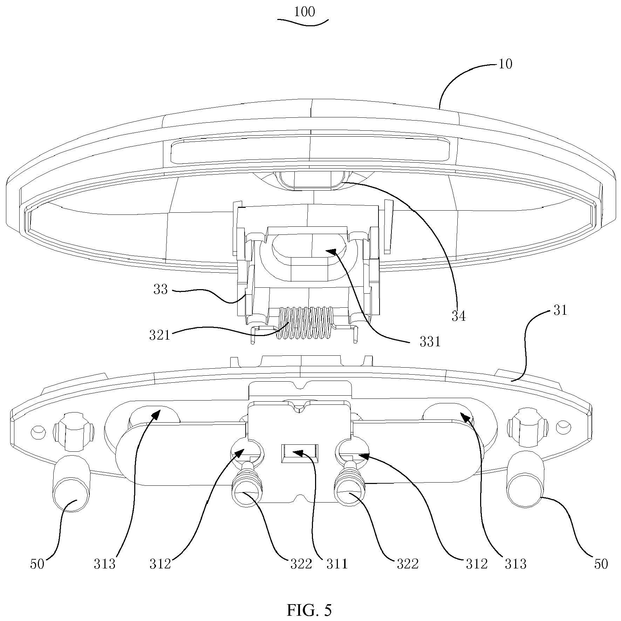

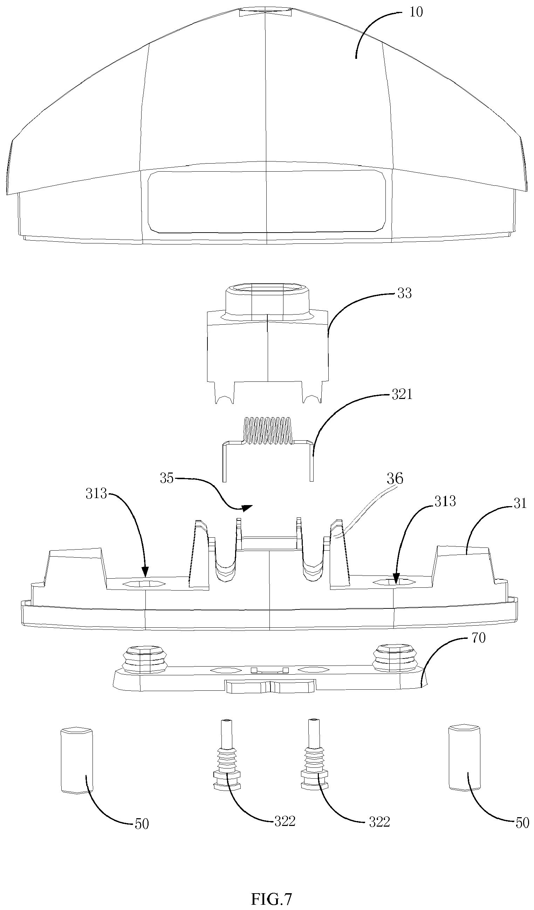

Referring to FIGs. 5 and 7, the atomization core 32 is positioned in the atomization chamber 35, and fixed in the bracket 36. The atomization core 32 is further blocked the guiding hole 322, and the liquid can infiltrate into the atomization core 32. A portion of the atomization core 32 further orderly extends through the seal element 70 and the atomization base 31, and elastically contact to the contact pins 60. The atomizer 100 is thus electrically connected to the battery assembly 200.

The atomization core 32 includes a heating wire 321, a guide rod (not shown) is twined by the heating wire 321, and two contact terminals 322. The heating wire 321 includes two ends electrically connected to two contact terminals 322. The guide rod is made of cotton materials, each guide hole 332 is blocked by the guiding rod and the guiding rod is partially positioned in the atomization chamber 35.

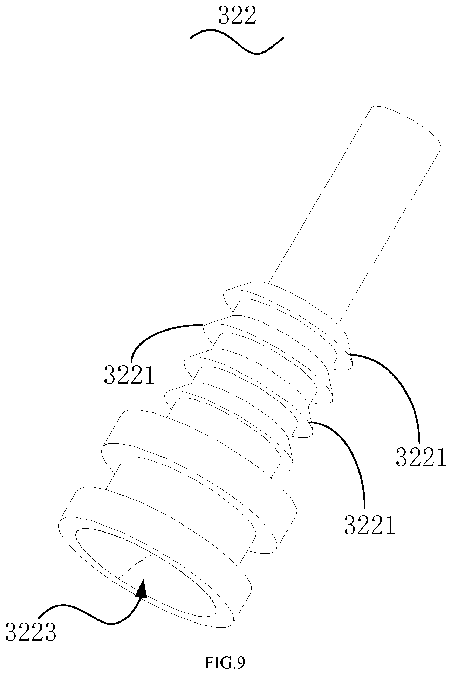

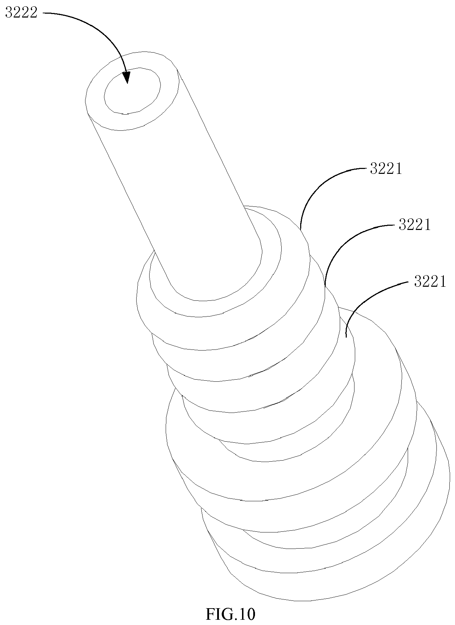

Referring to FIGs.7,9-10, the two contact terminals 322 both extend through the sealing element 70, and then extend through the atomization base 31 via the pin holes 312. One end of each contact terminal 322 is inserted into the pin holes 312, and defines a first inserting hole 3222 and facing the atomization core 32. The two ends of the heating wire 321 are inserted into the inserting hole 3222 and electrically contact to the contact terminal 322. The other end of each contact terminal 322 defines a second inserting hole 3223. A size of the other end of each contact terminal 322 is larger than that of the pin hole 60, the other end of each contact terminal 322 is thus positioned at a side facing the battery assembly 200. The second inserting hole 3223 of each contact terminal 322 correspondingly faces each contact pins 60, and accommodates the corresponding contact pins 60 for electrically contacting the corresponding contact pin 60.

Each contact terminal 322 further forms a plurality of sealing rings 3221 surrounding the contact terminal 322 and arranged at intervals. One of the sealing rings 3221 is near the atomization base 31. The sealing rings 3221 are in a raked stage shape. Each sealing ring 3221 protrudes from the contact terminal 322, two opposite sides of each sealing ring 3221 are both circular ring plane, one side of the each sealing ring 3221 facing the atomization core 32 is larger than the other side. A side wall between the two opposite sides of each sealing ring 3221 is smoothly and gradually inclined from the one side toward the other side. Each contact terminal 322 is easily inserted though the sealing element 70 and the atomization base 31 because of the incline side wall of each sealing ring 3221, and is firmly seal the pin holes 312 via the sealing rings.

The atomizer 100 further includes two second magnetic elements 50. The second magnetic elements 50 are fixed in a side the atomization base 31 facing the battery assembly 200. The second magnetic elements 50 are contracted by the first magnetic element 50 to enable the atomizer 100 to be firmly plugged into the plug space 21.

The above are preferred embodiments of the present disclosure merely and are not intended to limit the patent scope of the present disclosure. Any equivalent structures made according to the description and the accompanying drawings of the present disclosure without departing from the idea of the present disclosure, or any equivalent structures applied in other relevant technical fields directly or indirectly are intended to be included in the patent protection scope of the present disclosure.

## Claims

1. A battery assembly for an electronic cigarette, comprising:
a housing integrally formed and having an opening, the housing defining a cavity communicating with the opening, the housing further comprising an inner surface surrounding the cavity; and
an assembling board inserted into the cavity from the opening and fixed in the housing for dividing the cavity into an assembling space and a plug space, the plug space communicating with the opening and accommodating an atomizer via the opening; the assembling space deviating from the opening, and being configured to receive one or more electronic components which are electrically connected to the atomizer.

2. The battery assembly according to claim 1, wherein the assembling board is further configured to seal the one or more electronic components.

3. The battery assembly according to claim 1, wherein the battery assembly further comprises a sealing gasket, a peripheral wall of the assembling board defines a fixing groove for accommodating the gasket, the gasket is pressed to deform by the inner surface of the housing.

4. The battery assembly according to claim 1, wherein the assembling board comprises a flat top surface facing to the opening, the battery assembly further comprises at least one contact pin positioned at the top surface, the one or more electronic components are electrically connected to the atomizer received in the plug space via the at least one contact pin.

5. The battery assembly according to claim 4, wherein the one or more electronic components are fixed in a bottom surface of the assembling board opposite to the top surface.

6. The battery assembly according to claim 5, wherein the one or more electronic components comprise a main circuit board and a battery electrically connected to the main circuit board, the battery is fixed in the main circuit board, the main circuit board is inserted into the assembling board and the at least one contact pin is electrically connected to the main circuit board.

7. The battery assembly according to claim 6, wherein the battery assembly further comprises a light source electrically connected to the main circuit board, the light source is configured to emit lights, the housing further includes a transmitting portion, the light emitted transmits out of the housing from the transmitting portion.

8. The battery assembly according to claim 1, wherein the battery assembly further comprises a fastening member and a limiting block extending from the inner surface, the fastening member is configured to extend through the assembling board and engage with the limiting block to fix the assembling board in the housing.

9. A battery assembly for an electronic cigarette, comprising:
a housing defines an opening and a cavity communicating with the opening, the housing further comprising an inner surface surrounding the cavity; and
an assembling board inserted into the cavity from the opening and fixed in the housing for dividing the cavity into an assembling space and a plug space, the plug space communicating with the opening and accommodating an atomizer; the assembling space deviating from the opening, and being configured to received one or more electronic components which are electrically connected to the atomizer; the assembling board being configured to seal the one or more electronic components.

10. The battery assembly according to claim 9, wherein the battery assembly further comprises a sealing gasket, a peripheral wall of the assembling board defines a fixing groove for accommodating the sealing gasket, the sealing gasket is pressed to deform by the inner surface of the housing.

11. The battery assembly according to claim 9, wherein the battery assembly further comprises a fastening member and a limiting block extending from the inner surface, the fastening member is configured to extend through the assembling board and engage with the limiting block to fix the assembling board in the housing.

12. An electronic cigarette, comprising:
an atomizer; and
a battery assembly powering the atomizer, the battery comprising:
a housing integrally formed and having an opening, the housing defining a cavity communicating with the opening, the housing further comprising an inner surface surrounding the cavity; and
an assembling board inserted into the cavity from the opening and fixed in the housing for dividing the cavity into an assembling space and a plug space, the plug space communicating with the opening and accommodating an atomizer via the opening; the assembling space deviating from the opening, and receive one or more electronic components which are electrically connected to the atomizer.

13. The electronic cigarette according to claim 12, wherein the assembling board is further configured to seal the one or more electronic components.

14. The electronic cigarette according to claim 13, wherein the battery assembly further comprises a sealing gasket, a peripheral wall of the assembling board defines a fixing groove for accommodating the sealing gasket, the sealing gasket is pressed to deform by the inner surface of the housing.

15. The electronic cigarette according to claim 14, wherein the assembling board comprises a flat top surface facing to the opening, the battery assembly further comprises at least one contact pin positioned at the top surface, the one or more electronic components are electrically connected to the atomizer received in the plug space via the at least one contact pin.
